# EUROPEAN PATENT SPECIFICATION

(11) **EP 2 579 465 B1**
(45) Date of publication and mention of the grant of the patent: **19.03.2014**
(21) Application number: 12181856.1
(22) Date of filing: 27.08.2012
(51) Int. Cl.: H03M 7/30, H04L 29/06, H04L 29/08, G06F 3/06

(54) **Communication device, method of controlling communication device, and information processing system**
Kommunikationsvorrichtung, Verfahren zur Ansteuerung der Kommunikationsvorrichtung und Informationsverarbeitungssystem
Dispositif de communication, procédé de commande de dispositif de communication et système de traitement d'informations

(30) Priority: 07.10.2011 JP 2011223480
(43) Date of publication of application: 10.04.2013
(73) Proprietor: FUJITSU LIMITED, Kawasaki-shi, Kanagawa 211-8588 (JP)
(72) Inventor: Naganuma, Masanori, Kanagawa 211-8588 (JP); Nakayama, Shotaro, Kanagawa 211-8588 (JP); Takaki, Hanako, Kanagawa 211-8588 (JP); Sawakuri, Takashi, Kanagawa 211-8588 (JP)
(74) Representative: HOFFMANN EITLE

(56) References cited:
- US-A1- 2004 030 813
- US-A1- 2008 263 244

## Description

### FIELD

The embodiments discussed herein are related to a communication device, a method of controlling a communication device, and an information processing system.

### BACKGROUND

In the past, input/output (I/O) devices such as storage devices, consoles, and printers are connected to a large-size general-purpose machine via an OC (Optical Channel) LINK (a registered trademark) or a BMC (Block Multiplexer Channel) (a registered trademark). A connection between a large-size general-purpose machine and an I/O device via the OCLINK or the BMC is limited to a maximum of several kilometers.

Further, there is a case in which it is preferable to install and operate an I/O device at a site remote from a large-size general-purpose machine. For example, there is a case in which a large-size general-purpose machine is installed at Tokyo, but an I/O device is installed at Osaka. In this case, since a limit of a physical connection distance of an interface is exceeded, an extension device between the large-size general-purpose machine and the I/O device may be installed to extend the limit of the physical connection distance of the interface.

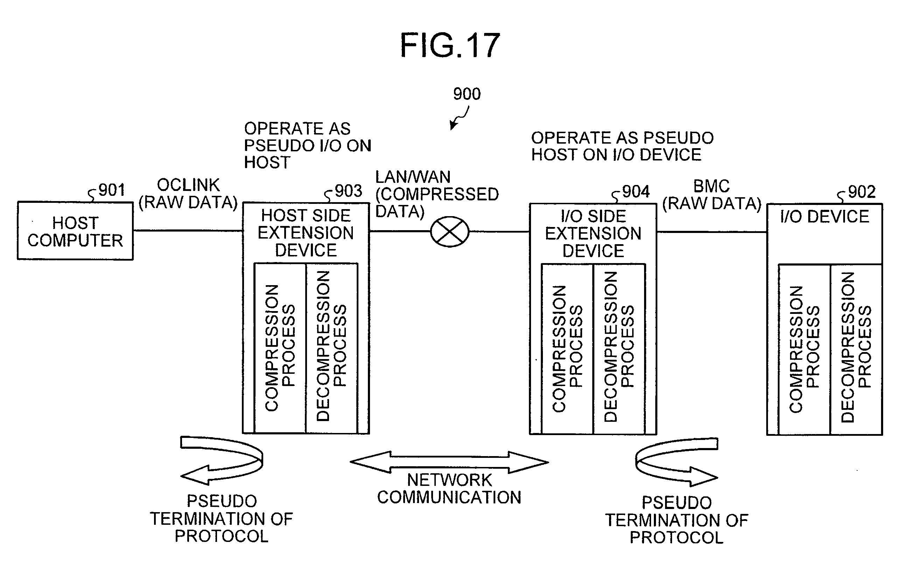

An information processing system, which performs transmission and reception of data between a large-size general-purpose machine and an I/O device using an extension device, will be described with reference to FIG. 17. FIG. 17 is a diagram illustrating an information processing system that performs transmission and reception of data between a large-size general-purpose machine and an I/O device using an extension device. As illustrated in FIG. 17, an information processing system 900 includes a host computer 901 which is a large-size general-purpose machine, an I/O device 902, a host side extension device 903, and an I/O side extension device 904.

In the information processing system 900, the host computer 901 and the host side extension device 903 are connected to communicate with each other, for example, via the OCLINK. The I/O device 902 and the I/O side extension device 904 are connected to communicate with each other via the BMC. The host side extension device 903 and the I/O side extension device 904 are connected to communicate with each other via a LAN (Local Area Network) or a WAN (Wide Area Network).

In the information processing system 900, when data is transferred from the host computer 901 to the I/O device 902, the host computer 901 transfers the data to the host side extension device 903. In order to effectively use a network band, the host side extension device 903 compresses the data received from the host computer 901, and transfers the compressed data to the I/O side extension device 904.

The I/O side extension device 904 decompresses the data received from the host side extension device 903, and then transfers the decompressed data to the I/O device 902. The I/O device 902 compresses the data received from the I/O side extension device 904 and then stores the compressed data in the storage unit in order to effectively utilize resources of a storage unit included therein.

Further, when data is transferred from the I/O device 902 to the host computer 901, the I/O device 902 decompresses compressed data read from the storage unit, and transfers the decompressed data to the I/O side extension device 904. In order to effectively use a network band, the I/O side extension device 904 compresses the data received from the I/O device 902, and then transfers the compressed data to the host side extension device 903.

Then, the host side extension device 903 decompresses the compressed data received from the I/O side extension device 904, and then transfers the decompressed data to the host computer 901. As described above, when transmission and reception of data are performed between the host computer 901 and the I/O device 902, the information processing system 900 effectively utilize the network band and the resources of the storage unit using a data compression function.
Patent Literature 1: Japanese Laid-open Patent Publication No. 06-202929
Patent Literature 2: Japanese Laid-open Patent Publication No. 10-294769.
Patent Literature 3: US 2008/263244 A1. This patent describes a compression control device for controlling the compression of data transceived in a storage system constituted by a plurality of apparatuses which include a storage device. The compression control device decides a compression control method for at least one apparatus constituting the storage system based on configuration information related to the configuration of the storage system, and controls at least one of the plurality of apparatuses such that the at least one apparatus carries out compression in accordance with the decided compression control method.

However, in the above-described related art, there is a problem in that processing at the time of information communication is not efficient.

Specifically, even when data is transmitted from the host computer 901 to the I/O device 902 or even when data is transmitted from the I/O device 902 to the host computer 901, the devices inevitably perform a data compression process and a data decompression process. In other words, the compression process or the decompression process is executed inside a plurality of devices. That is, since each of the devices performs the compression/decompression process, overall processing efficiency at the time of data transmission is lowered.

In the host side extension device 903 and the I/O side extension device 904, processing efficiency when the compression function is enabled is about 10% to 25% lower than processing efficiency when the compression function is disabled.

Further, similarly in the I/O device 902, processing efficiency when the compression function is enabled is expected to be lower than processing efficiency when the compression function is disabled.

As described above, when the compression function is used, communication between the host side extension device 903 and the I/O side extension device 904 is efficiently performed, but processing efficiency in each of the host side extension device 903, the I/O side extension device 904, and the I/O device 902 is lowered.

Accordingly, it is an object in one aspect of an embodiment of the invention to provide a communication device, a method of controlling a communication device, and an information processing system, which are capable of further improving processing efficiency at the time of information communication.

### SUMMARY

According to an aspect of an embodiment, a communication device that performs transmission and reception of data with another device through a relay device connected to a network, comprises a compression process unit that executes a compression process on data to be transmitted to the other device and generates compressed data, a notification control unit that includes decompression control information to instruct the relay device not to execute a decompression process on the compressed data and compression control information to instruct the other device not to execute a compression process on data in a transmission notice notifying that the communication device is to transmit the compressed data to the other device through the relay device, and a transmitting unit that transmits the transmission notice including the decompression control information and the compression control information to the other device through the relay device.

### BRIEF DESCRIPTION OF DRAWINGS

FIG. 1 is a diagram illustrating a configuration of an information system;
FIG. 2 is a diagram illustrating a data transfer direction and a point of executing a compression process and a decompression process in an information processing system;
FIG. 3 is a block diagram illustrating a configuration of an I/O device;
FIG. 4 is a diagram illustrating an example of a data format of mode setting data;
FIG. 5 is a block diagram illustrating a configuration of a host side extension device;
FIG. 6 is a block diagram illustrating a configuration of an I/O side extension device;
FIG. 7 is a diagram illustrating a processing sequence at the time of data writing in an information processing system;
FIG. 8 is a diagram illustrating a processing sequence at the time of data reading in an information processing system;
FIG. 9 is a flowchart illustrating a processing procedure of data transmission performed by a host side extension device;
FIG. 10 is a flowchart illustrating a processing procedure of data transmission performed by an I/O side extension device;
FIG. 11 is a flowchart illustrating a processing procedure of processing performed by an I/O device;
FIG. 12 is a flowchart illustrating a processing procedure of a data reception process performed by an I/O side extension device;
FIG. 13 is a flowchart illustrating a processing procedure of a data reception process performed by a host side extension device;
FIG. 14 is a diagram illustrating an example of a compressed data verifying process;
FIG. 15 is a diagram illustrating another example of a compressed data verifying process;
FIG. 16 is a diagram illustrating processing of executing a function of a host side extension device as firmware; and
FIG. 17 is a diagram illustrating an information processing system that performs transmission and reception of data between a large-size general-purpose machine and an I/O device using an extension device.

### DESCRIPTION OF EMBODIMENTS

Preferred embodiments of the present invention will be explained with reference to accompanying drawings. The invention is not limited to the following embodiments. The embodiments may be appropriately combined in a range in which processing contents are not in conflict.

### [a] First Embodiment

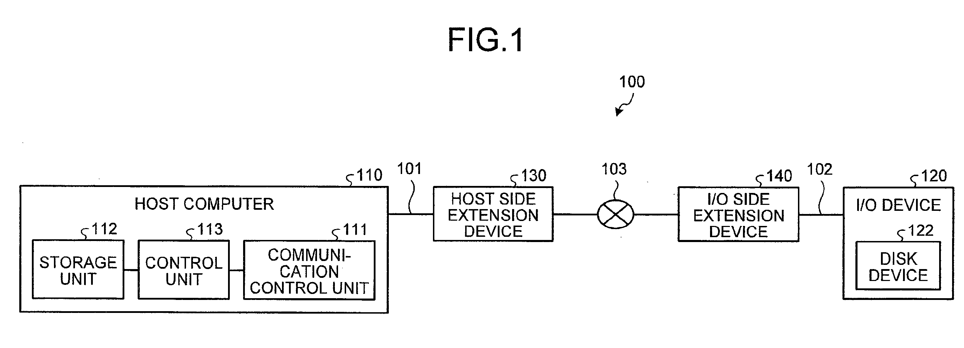

In a first embodiment, a configuration of an information processing system, a configuration of each device included in the information processing system, a processing operation of the information processing system, a processing procedure performed by the information processing system, effects, and the like will be described with reference to FIGS. 1 to 15.

### Configuration of Information Processing System

FIG. 1 is a block diagram illustrating a configuration of an information processing system according to the first embodiment. As illustrated in FIG. 1, an information processing system 100 according to the first embodiment includes a host computer 110, an I/O device 120, a host side extension device 130, and an I/O side extension device 140.

As illustrated in FIG. 1, the host computer 110 and the host side extension device 130 are connected to communicate with each other via a channel 101 such as the OCLINK or the like. The I/O device 120 and the I/O side extension device 140 are connected to communicate with each other via a channel 102 such as the BMC. The host side extension device 130 and the I/O side extension device 140 are connected to communicate with each other via a network 103 such as the LAN or the WAN.

The number of the host computers 110, the number of the I/O devices 120, the number of the host side extension devices 130, and the number of the I/O side extension devices 140, which are included in the information processing system 100, are not limited to the number illustrated in FIG. 1 and may be changed.

For example, the host computer 110 is a large-size general-purpose machine, and inputs/outputs data from/to the I/O device 120 through the host side extension device 130 and the I/O side extension device 140. For example, when the host computer 110 outputs data to the I/O device 120, the host computer 110 transmits output data to the host side extension device 130.

When the host computer 110 receives data from the I/O device 120, the host computer 110 requests the I/O device 120 to transmit data through the host side extension device 130 and the I/O side extension device 140. Then, the host computer 110 receives the data transmitted by the I/O device 120 through the host side extension device 130.

For example, the I/O device 120 includes a disk device 122, and writes data, which is received from the host computer 110 through the host side extension device 130 and the I/O side extension device 140, in the disk device 122. For example, the I/O device 120 includes a storage device, a console that receives a user's instruction, an output device that outputs an image based on data, and the like, and controls an input and output of data between the devices and the host computer 110. In the following, a description will proceed in connection with an example in which the I/O device 120 includes the disk device 122.

The host side extension device 130 transfers the data received from the host computer 110 to the I/O side extension device 140. Further, the host side extension device 130 transfers the data received from the I/O side extension device 140 to the host computer 110.

The I/O side extension device 140 transfers the data received from the host side extension device 130 to the I/O device 120. Further, the I/O side extension device 140 transfers the data received from the I/O device 120 to the host side extension device 130.

Here, an example in which the host computer 110 writes data in the I/O device 120 in the information processing system 100 will be described. Here, it is assumed that the compression aggregation setting information of the host side extension device 130 remains set to be valid. Here, what the compression aggregation setting information remains set to be valid represents that the data compression process and the data decompression process are aggregated into the host side extension device 130. The compression aggregation setting information of the host side extension device 130 is assumed to be set in advance.

The host side extension device 130 compresses the data received from the host computer 110 and generates compressed data. Further, when a data write request is transmitted to the I/O device 120, the host side extension device 130 executes the following process. In other words, the host side extension device 130 includes information to instruct the I/O side extension device 140 not to decompress the compressed data and information to instruct the I/O device 120 not to compress the data in the data write request. Then, the host side extension device 130 transmits the data write request to the I/O device 120 through the I/O side extension device 140.

Then, the host side extension device 130 transmits the compressed data to the I/O side extension device 140. Thus, the I/O side extension device 140 transfers the compressed data received from the host side extension device 130 to the I/O device 120 without executing the decompression process on the compressed data. Subsequently, the I/O device 120 stores the compressed data received from the I/O side extension device 140 in the disk device 122 included therein.

Next, an example in which the host computer 110 reads data from the I/O device 120 will be described. Here, similarly, the compression aggregation setting information of the I/O device 120, the host side extension device 130, and the I/O side extension device 140 is assumed to remain set to be valid.

When the host side extension device 130 transmits a request for reading the compressed data held in the I/O device 120, the host side extension device 130 executes the following process. In other words, the host side extension device 130 includes information to instruct the I/O device 120 not to execute the data decompression process and information to instruct the I/O side extension device 140 not to execute the data compression process in the compressed data read request. Then, the host side extension device 130 transmits the compressed data read request to the I/O device 120 through the I/O side extension device 140.

The I/O device 120 reads the compressed data stored therein, and transmits the read compressed data to the I/O side extension device 140 without executing the decompression process on the read compressed data. The I/O side extension device 140 transfers the compressed data received from the I/O device 120 to the host side extension device 130. The host side extension device 130 performs the decompression process the compressed data received from the I/O side extension device 140, and then transmits the decompressed data to the host computer 110.

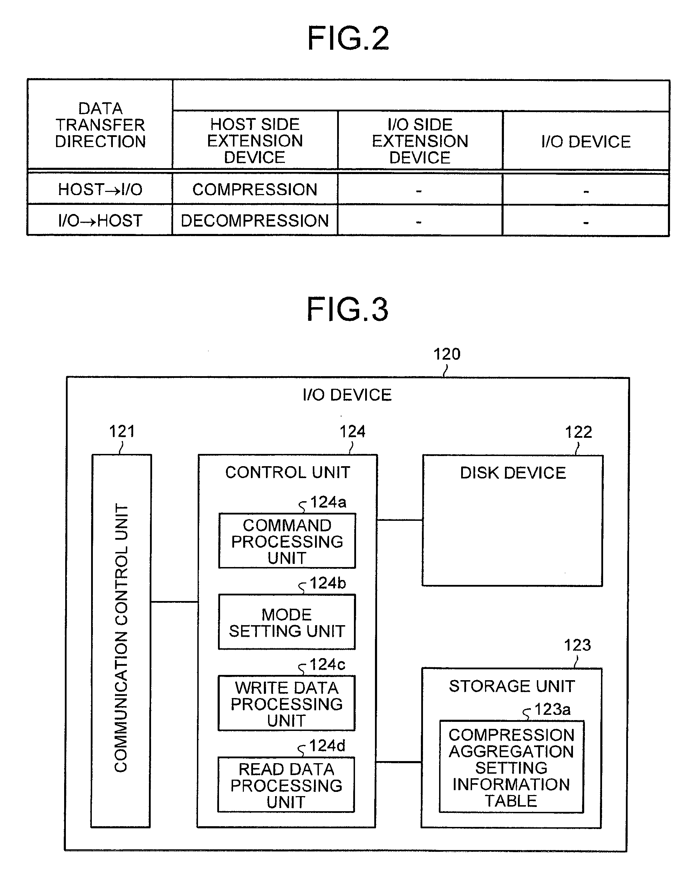

A data transfer direction and a point of executing the compression process and the decompression process in transmission and reception of data between the host computer 110 and the I/O device 120 will be described. FIG. 2 is a diagram illustrating a data transfer direction and a point of executing the compression process and the decompression process in the information processing system. As illustrated in FIG. 2, when the host computer 110 writes data in the I/O device 120, only the host side extension device 130 executes the data compression process. Further, when data is read from the I/O device 120 to the host computer 110, only the host side extension device 130 executes the data decompression process.

As described above, in the information processing system 100, the host side extension device 130 notifies the I/O side extension device and the I/O device of the fact that only the own device executes the data compression process and the data decompression process, and then performs transmission or reception of data. Thus, in the information processing system 100, the number of times that the I/O device 120 and the I/O side extension device 140 execute the compression process and the decompression process can be reduced. As a result, in the information processing system 100, processing efficiency of the I/O device 120 and the I/O side extension device 140 can be improved.

### Configuration of Host Computer

Next, a configuration of the host computer 110 according to the first embodiment will be described with reference to FIG. 1. FIG. 1 is a block diagram illustrating a configuration of the host computer according to the first embodiment. The host computer 110 according to the first embodiment includes a communication control unit 111, a storage unit 112, and a control unit 113.

The communication control unit 111 has an interface with the host side extension device 130, and transmits data received from the control unit 113 to the host side extension device 130. The communication control unit 111 outputs data received from the host side extension device 130 to the control unit 113.

For example, the storage unit 112 is a storage device such as a semiconductor memory device, and stores data or a program used in a variety of processing performed by the host computer 110.

The control unit 113 includes an internal memory for storing a control program, a program specifying various processing procedures and the like, and data, and executes a variety of processing. For example, the control unit 113 is an electronic circuit such as a CPU (Central Processing Unit) or an MPU (Micro Processing Unit).

When data is written in the I/O device 120, the control unit 113 sets an operation condition, and makes a data write request. For example, the control unit 113 generates a mode setting command representing that mode setting data which is data used to set an operation condition is to be transmitted, and transmits the mode setting command to the host side extension device 130 through the communication control unit 111. Then, upon receiving a response to the mode setting command, the control unit 113 transmits the mode setting data. The details of the mode setting data will be described later.

Subsequently, upon receiving a response to the mode setting data, the control unit 113 generates a write command to make a data write request, and transmits the write command to the host side extension device 130 through the communication control unit 111. Then, upon receiving a response to the write command, the control unit 113 transmits data, on which the write request has been made, to the host side extension device 130 through the communication control unit 111. In the following, data on which the write request is made by the host computer 110 is referred to appropriately as "write data."

Further, when data stored in the I/O device 120 is read, the control unit 113 sets the operation condition, and makes a data read request. For example, the control unit 113 generates the mode setting command, and transmits the mode setting command to the host side extension device 130 through the communication control unit 111. Then, upon receiving a response to the mode setting command, the control unit 113 transmits the mode setting data.

Then, the control unit 113 generates a read command to make a data read request, and transmits the read command to the host side extension device 130 through the communication control unit 111. As a result, the host computer 110 receives the data, on which the read request has been made, from the I/O device 120. In the following, data on which the read request is made by the host computer 110 is referred to appropriately as "read data."

### Configuration of I/O Device

Next, a configuration of the I/O device 120 according to the first embodiment will be described with reference to FIG. 3. FIG. 3 is a block diagram illustrating a configuration of the I/O device according to the first embodiment. The I/O device 120 according to the first embodiment includes a communication control unit 121, the disk device 122, a storage unit 123, and a control unit 124.

The communication control unit 121 has an interface with the I/O side extension device 140, determines the type of data received from the I/O side extension device 140, and outputs the determined type of data to the control unit 124. Here, examples of the type of data include the mode setting command, the mode setting data, the write command, the write data, the read command, and the read data.

The communication control unit 121 transmits data read by a read data processing unit 124d to the I/O side extension device 140. Further, the communication control unit 121 transmits responses to various commands output by a command processing unit 124a to the I/O side extension device 140.

For example, the disk device 122 is a RAID (Redundant Arrays of Inexpensive Disks), and stores data received from the host computer 110.

The storage unit 123 includes a compression aggregation setting information table 123a. For example, the storage unit 123 is a storage device such as a semiconductor memory device.

The compression aggregation setting information table 123a stores information representing whether or not the compression process is to be executed on data on which the write request is received and information representing whether or not the decompression process is to be executed on data on which the read request is received. Here, information to be stored in the compression aggregation setting information table 123a is set by a mode setting unit 124b which will be described later.

For example, the control unit 124 is an electronic circuit such as a CPU or an MPU, and includes the command processing unit 124a, the mode setting unit 124b, a write data processing unit 124c, and the read data processing unit 124d.

Upon receiving the mode setting command from the I/O side extension device 140 through the communication control unit 121, the command processing unit 124a generates a response to the mode setting command, and outputs the response to the communication control unit 121.

Further, upon receiving when the write command from the I/O side extension device 140 through the communication control unit 121, the command processing unit 124a generates a response to the write command, and outputs the response to the communication control unit 121.

Further, upon receiving the read command from the I/O side extension device 140 through the communication control unit 121, the command processing unit 124a instructs the read data processing unit 124d to read data.

Upon receiving the mode setting data through the communication control unit 121, the mode setting unit 124b sets the compression aggregation setting information table 123a with reference to a value included in the mode setting data.

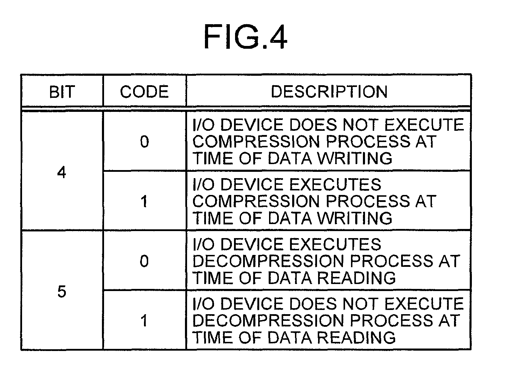

Next, a data format of the mode setting data will be described with reference to FIG. 4. FIG. 4 is a diagram illustrating an example of a data format of the mode setting data. As illustrated in FIG. 4, a code "0" or "1" is included in a fourth bit of the mode setting data. Here, when a code of the fourth bit of the mode setting data is "0," it means that the I/O device 120 does not execute the data compression process at the time of data writing. Further, when a code of the fourth bit of the mode setting data is "1," it means that the I/O device 120 executes the data compression process at the time of data writing.

Further, a code "0" or "1" is included in a fifth bit of the mode setting data. Here, when a code of the fifth bit of the mode setting data is "0," it means that the I/O device 120 executes the data decompression process at the time of data reading. Further, when a code of the fifth bit of the mode setting data is "1," it means that the I/O device 120 does not execute the data decompression process at the time of data reading.

Referring back to FIG. 3, the mode setting unit 124b determines whether or not the compression process is to be executed on the write data received from the host computer 110 with reference to the code of the fourth bit of the mode setting data. For example, when "0" is included in the code of the fourth bit of the mode setting data, the mode setting unit 124b determines that the compression process is not executed on the write data. However, when "1" is included in the code of the fourth bit of the mode setting data, the mode setting unit 124b determines that the compression process is executed on the write data. The mode setting unit 124b stores the determination result in the compression aggregation setting information table 123a.

Further, the mode setting unit 124b determines whether or not the decompression process is executed on data read from the disk device 122 with reference to the code of the fifth bit of the mode setting data. For example, when "0" is included in the code of the fifth bit of the mode setting data, the mode setting unit 124b determines that the decompression process is executed on the write data. However, when "1" is included in the code of the fifth bit of the mode setting data, the mode setting unit 124b determines that the decompression process is not executed on the data read from the disk device 122. The mode setting unit 124b stores the determination result in the compression aggregation setting information table 123a.

Upon receiving the write data, the write data processing unit 124c determines whether or not the compression process is executed on the received write data with reference to the compression aggregation setting information table 123a.

Here, when it is determined that the compression process is executed, the write data processing unit 124c executes the compression process on the received write data, and then stores the compressed write data in the disk device 122. However, when it is determined that the compression process is not executed, the write data processing unit 124c stores the received write data in the disk device 122.

Upon receiving an instruction to read data from the command processing unit 124a, the read data processing unit 124d reads the requested data from the disk device 122. Then, the read data processing unit 124d determines whether or not the decompression process is executed on the read data with reference to the compression aggregation setting information table 123a.

Here, when it is determined that the decompression process is executed on the read data, the read data processing unit 124d executes the decompression process on the read data, and then outputs the decompressed data to the communication control unit 121. However, when it is determined that the decompression process is not executed on the read data, the read data processing unit 124d outputs the read data to the communication control unit 121.

### Configuration of Host Side Extension Device

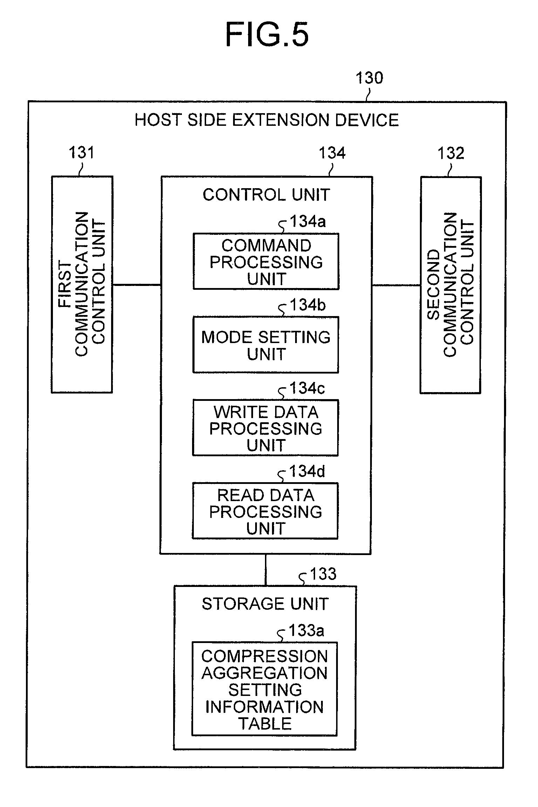

Next, a configuration of the host side extension device 130 according to the first embodiment will be described with reference to FIG. 5. FIG. 5 is a block diagram illustrating a configuration of the host side extension device according to the first embodiment. As illustrated in FIG. 5, the host side extension device 130 according to the first embodiment includes a first communication control unit 131, a second communication control unit 132, a storage unit 133, and a control unit 134.

The first communication control unit 131 has an interface with the host computer 110, and exchanges information with the host computer 110. For example, the first communication control unit 131 outputs various commands, the mode setting data, and the write data, which are received from the host computer 110, to the control unit 134. Further, the first communication control unit 131 receives the read data from a read data processing unit 134d, and then transfers the read data to the host computer 110.

The second communication control unit 132 has an interface with the I/O side extension device 140, and exchanges information with the I/O side extension device 140. For example, the second communication control unit 132 transfers various commands, the mode setting data, and the write data, which are received from the host computer 110 to the I/O side extension device 140. Further, the second communication control unit 132 outputs the read data received from the I/O side extension device 140 to the control unit 134.

The storage unit 133 includes a compression aggregation setting information table 133a. For example, the storage unit 133 is a storage device such as a semiconductor memory device.

The compression aggregation setting information table 133a stores information representing whether or not the compression aggregation setting of its own device is valid. For example, the compression aggregation setting information table 133a stores information representing that the compression aggregation setting of its own device is valid or information representing that the compression aggregation setting of its own device is invalid.

Here, what the compression aggregation setting remains set to be valid represents that the data compression process and the data decompression process are aggregated into the host side extension device 130. The information stored in the compression aggregation setting information table 133a of the host side extension device 130 is assumed to be set in advance.

Further, when information representing that the compression aggregation setting of its own device is invalid is stored, the value included in the code of the fourth bit of the mode setting data and the value included in the code of the fifth bit are stored in the compression aggregation setting information table 133a. In this case, the values included in the codes of the fourth and fifth bits stored in the compression aggregation setting information table 133a are set each time a mode setting unit 134b, which will be described later, receives the mode setting data.

The control unit 134 includes an internal memory for storing a control program, a program specifying various processing procedures and the like, and data. For example, the control unit 134 is an electronic circuit such as a CPU or an MPU, and includes a command processing unit 134a, the mode setting unit 134b, a write data processing unit 134c, and the read data processing unit 134d.

Upon receiving the mode setting command from the host computer 110 through the first communication control unit 131, the command processing unit 134a outputs the mode setting command to the second communication control unit 132.

Further, upon receiving the write command to make a data write request from the host computer 110 through the first communication control unit 131, the command processing unit 134a outputs the write command to the second communication control unit 132.

Further, upon receiving the read command to make the data read request from the host computer 110 through the first communication control unit 131, the command processing unit 134a outputs the received read command to the second communication control unit 132.

Further, upon receiving a response to a command from the I/O device 120 through the second communication control unit 132, the command processing unit 134a outputs the received response command to the first communication control unit 131.

Upon receiving the mode setting data from the host computer 110 through the first communication control unit 131, the mode setting unit 134b determines whether or not the compression aggregation setting of its own device is valid with reference to the compression aggregation setting information table 133a. Here, when it is determined that the compression aggregation setting of its own device is valid, the mode setting unit 134b determines whether or not the code of the fourth bit of the mode setting data is "0" and the code of the fifth bit is "1."

Here, when it is determined that the code of the fourth bit of the mode setting data is not "0," the mode setting unit 134b changes the code of the fourth bit of the mode setting data from "1" to "0." Further, when the code of the fifth bit of the mode setting data is not "1," the mode setting unit 134b changes the code of the fourth bit of the mode setting data from "0" to "1." Then, the mode setting unit 134b outputs the mode setting data to the second communication control unit 132. As a result, in the information processing system 100, the I/O side extension device 140 and the I/O device 120 are notified of the mode setting data so that the compression process and the decompression process can be aggregated into the host side extension device.

However, when it is determined that the compression aggregation setting of its own device is invalid, the mode setting unit 134b extracts the values included in the codes of the fourth and fifth bits of the mode setting data, and then stores the extracted values in the compression aggregation setting information table 133a. Then, the mode setting unit 134b transfers the mode setting data to the I/O side extension device 140 through the second communication control unit 132.

Further, when it is determined that the code of the fourth bit is "0" and the code of the fifth bit is "1," the mode setting unit 134b outputs the mode setting data to the second communication control unit 132 without changing the mode setting data.

Further, when it is determined that the compression aggregation setting of its own device is invalid, the mode setting unit 134b outputs the mode setting data to the second communication control unit 132.

Upon receiving the write data from the host computer 110 through the first communication control unit 131, the write data processing unit 134c determines whether or not the compression aggregation setting of its own device is valid with reference to the compression aggregation setting information table 133a.

Here, when it is determined that the compression aggregation setting of its own device is valid, the write data processing unit 134c executes the compression process on the data received from the host computer 110. Then, the write data processing unit 134c outputs the compressed data to the second communication control unit 132.

However, when it is determined that the compression aggregation setting of its own device is invalid, the write data processing unit 134c outputs the data to the second communication control unit 132.

Upon receiving the read data from the I/O side extension device 140 through the second communication control unit 132, the read data processing unit 134d determines whether or not the compression aggregation setting of its own device is valid with reference to the compression aggregation setting information table 133a. Here, when it is determined that compression setting is valid, the read data processing unit 134d executes the decompression process on compressed read data received from the I/O side extension device 140. Then, the read data processing unit 134d transmits the decompressed data to the host computer 110 through the first communication control unit 131.

However, when it is determined that compression setting is invalid, the read data processing unit 134d executes the decompression process on compressed data received from the I/O side extension device 140 through the second communication control unit 132, and then transmits the decompressed data to the host computer 110.

Further, when it is determined that compression setting is invalid, the read data processing unit 134d transmits uncompressed data, which is received from the I/O side extension device 140 through the second communication control unit 132, to the host computer 110 without executing the decompression process on the uncompressed data.

### Configuration of I/O Side Extension Device

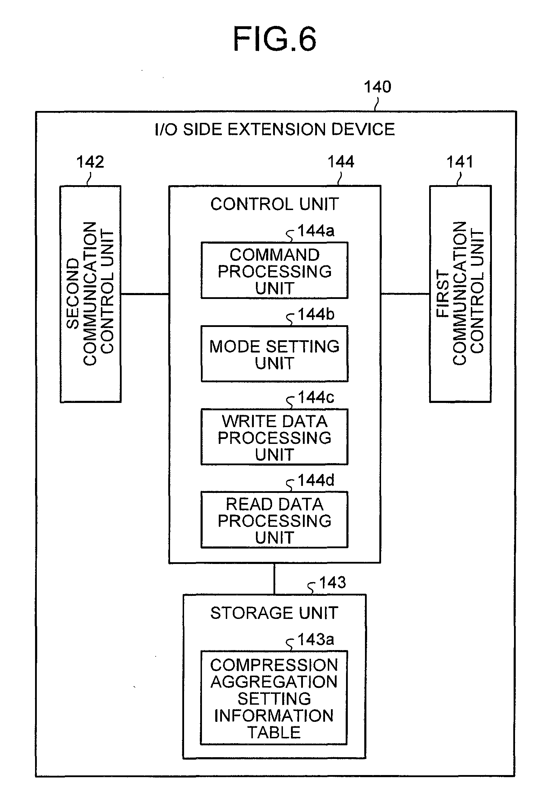

Next, a configuration of the I/O side extension device 140 according to the first embodiment will be described with reference to FIG. 6. FIG. 6 is a block diagram illustrating a configuration of the I/O side extension device according to the first embodiment. As illustrated in FIG. 6, the I/O side extension device 140 according to the first embodiment includes a first communication control unit 141, a second communication control unit 142, a storage unit 143, and a control unit 144.

The first communication control unit 141 has an interface with the I/O device 120, and exchanges information with the I/O device 120. For example, the first communication control unit 141 outputs various responses and the read data, which are received from the I/O device 120, to the control unit 144. Further, the first communication control unit 141 receives the write data from a write data processing unit 144c, and transfers the write data to the I/O device 120.

The second communication control unit 142 has an interface with the host side extension device 130, and exchanges information with the host side extension device 130. For example, the second communication control unit 142 transfers various commands, the mode setting data, and the write data, which are received from the host side extension device 130 to the I/O device 120. Further, the second communication control unit 142 transfers the read data received from the I/O device 120 to the host side extension device 130.

The storage unit 143 includes a compression aggregation setting information table 143a. For example, the storage unit 143 is a storage device such as a semiconductor memory device.

The compression aggregation setting information table 143a stores information representing whether or not the compression aggregation setting of its own device is valid. For example, the compression aggregation setting information table 143a stores information representing that the compression aggregation setting of its own device is valid or information representing that the compression aggregation setting of its own device is invalid. Here, what the compression aggregation setting remains set to be valid represents that the data compression process and the data decompression process are aggregated into the host side extension device 130. The information stored in the compression aggregation setting information table 143a of the I/O side extension device 140 is assumed to be set in advance.

Further, when information representing that the compression aggregation setting of its own device is invalid is stored, the compression aggregation setting information table 143a stores the value included in the code of the fourth bit of the mode setting data and the value included in the code of the fifth bit. In this case, the values included in the codes of the fourth and fifth bits stored in the compression aggregation setting information table 143a are set each time a mode setting unit 144b, which will be described later, receives the mode setting data.

The control unit 144 includes an internal memory for storing a control program, a program specifying various processing procedures and the like, and data. For example, the control unit 144 is an electronic circuit such as a CPU or an MPU, and includes a command processing unit 144a, the mode setting unit 144b, the write data processing unit 144c, and a read data processing unit 144d.

Upon receiving the mode setting command from the host side extension device 130 through the second communication control unit 142, the command processing unit 144a outputs the mode setting command to the first communication control unit 141.

Further, upon receiving the write command from the host side extension device 130 through the second communication control unit 142, the command processing unit 144a outputs the write command to the first communication control unit 141.

Further, upon receiving the read command from the host side extension device 130 through the second communication control unit 142, the command processing unit 144a outputs the read command to the first communication control unit 141.

Further, upon receiving a command from the I/O device 120 through the first communication control unit 141, the command processing unit 144a outputs the received response to the second communication control unit 142.

Upon receiving the mode setting data from the host side extension device 130 through the first communication control unit 141, the mode setting unit 144b determines whether or not the compression aggregation setting of its own device is valid with reference to the compression aggregation setting information table 143a. Here, when it is determined that the compression aggregation setting of its own device is valid, the mode setting unit 144b outputs the mode setting data to the first communication control unit 141.

However, when it is determined that the compression aggregation setting of its own device is invalid, the mode setting unit 144b extracts the values included in the codes of the fourth and fifth bits of the mode setting data, and then stores the extracted values in the compression aggregation setting information table 143a. Then, the mode setting unit 144b transfers the mode setting data to the I/O device 120 through the first communication control unit 141.

Upon receiving the write data from the host side extension device 130, the write data processing unit 144c determines whether or not the compression aggregation setting of its own device is valid with reference to the compression aggregation setting information table 143a. Here, when it is determined that the compression aggregation setting of its own device is valid, the write data processing unit 144c transfers the data received from the host side extension device 130 to the I/O device 120 through the first communication control unit 141.

However, when it is determined that the compression aggregation setting of its own device is invalid, the write data processing unit 144c determines whether or not the code of the fourth bit of the mode setting data stored in the compression aggregation setting information table 143a is "1." Here, when it is determined that the code of the fourth bit of the mode setting data is not "1," the write data processing unit 144c transfers the data received from the host side extension device 130 to the I/O device 120 through the first communication control unit 141.

However, when it is determined that the code of the fourth bit of the mode setting data stored in the compression aggregation setting information table 143a is "1," the write data processing unit 144c executes the decompression process on the data received from the host side extension device 130. Then, the write data processing unit 144c transmits the decompressed write data to the I/O device 120 through the first communication control unit 141.

Further, upon receiving the read data from the I/O device 120, the read data processing unit 144d determines whether or not the compression aggregation setting of its own device is valid with reference to the compression aggregation setting information table 143a. Here, when it is determined that the compression aggregation setting of its own device is valid, the read data processing unit 144d transfers the data received from the I/O device 120 to the host side extension device 130 through the second communication control unit 142.

However, when it is determined that the compression aggregation setting of its own device is invalid, the read data processing unit 144d determines whether or not the code of the fifth bit of the mode setting data stored in the compression aggregation setting information table 143a is "1." Here, when it is determined that the code of the fifth bit of the mode setting data is not "1," the read data processing unit 144d transfers the read data received from the I/O device 120 to the host side extension device 130 through the second communication control unit 142.

However, when it is determined the code of the fifth bit of the mode setting data stored in the compression aggregation setting information table 143a is "1," the read data processing unit 144d executes the compression process on the data received from the I/O device 120. Then, the write data processing unit 144c transmits the compressed write data to the host side extension device 130 through the second communication control unit 142.

### Processing Operation in Information Processing System

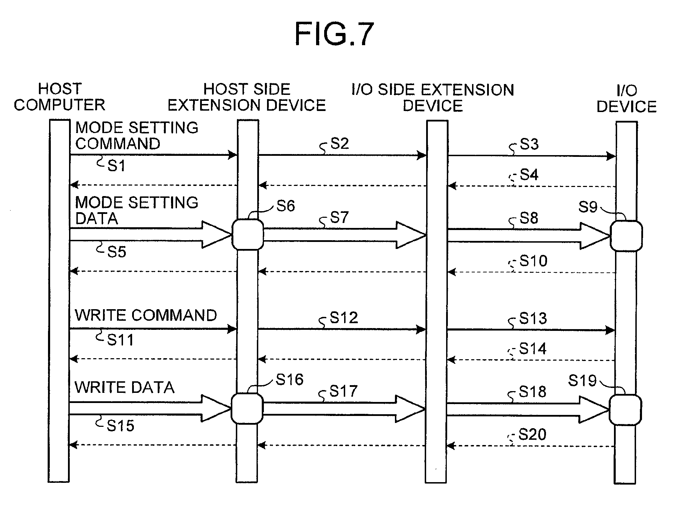

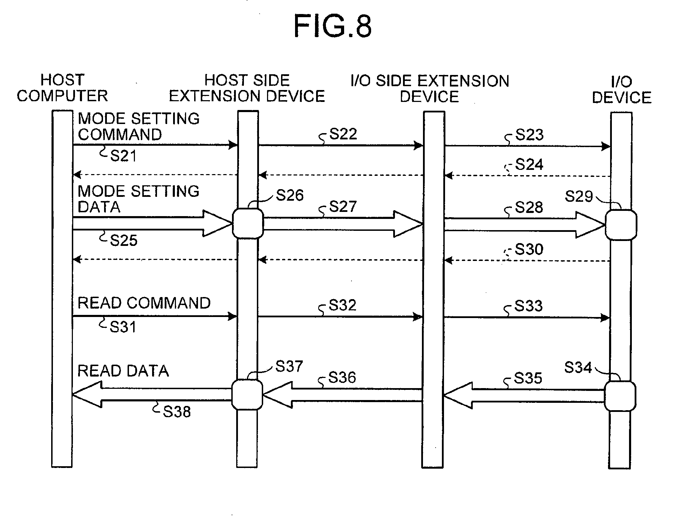

Next, a processing operation in the information processing system 100 will be described with reference to FIGS. 7 and 8. Here, the compression aggregation setting of both of the host side extension device 130 and the I/O side extension device 140 is assumed to be valid. Further, it is assumed that the code of the fourth bit of the mode setting data transmitted by the host computer 110 is "1" and the code of the fifth bit is "0."

### Processing at the Time of Data writing

FIG. 7 is a diagram illustrating a processing sequence at the time of data writing in the information processing system. As illustrated in FIG. 7, when data is written in the I/O device 120, the host computer 110 generates a mode setting command representing that mode setting data which is data used to set an operation condition is to be transmitted, and then transmits the mode setting command to the host side extension device 130 (step S1).

The host side extension device 130 transfers the mode setting command received from the host computer 110 to the I/O side extension device 140 (step S2). Then, the I/O side extension device 140 transfers the mode setting command received from the host side extension device 130 to the I/O device 120 (step S3).

The I/O device 120 transmits a response representing reception of the mode setting command to the host computer 110 through the I/O side extension device 140 and the host side extension device 130 (step S4).

The host computer 110 generates mode setting data, and then transmits the generated mode setting data to the host side extension device 130 (step S5). Since the code of the fourth bit of the mode setting data received from the host computer 110 is "1," the host side extension device 130 changes the code of the fourth bit of the mode setting data from "1" to "0" (step S6).

Then, the host side extension device 130 transmits the mode setting data to the I/O side extension device 140 (step S7). The I/O side extension device 140 transfers the mode setting data received from the host side extension device 130 to the I/O device 120 (step S8).

The I/O device 120 extracts the codes of the fourth and fifth bits of the mode setting data, and then stores the extracted codes in the compression aggregation setting information table 123a (step S9). Then, the I/O device 120 transmits a response representing reception of the mode setting data to the host computer 110 through the I/O side extension device 140 and the host side extension device 130 (step S10).

The host computer 110 generates a write command, and then transmits the generated write command to the host side extension device 130 (step S11). The host side extension device 130 transfers the write command received from the host computer 110 to the I/O side extension device 140 (step S12). Subsequently, the I/O side extension device 140 transfers the write command received from the host side extension device 130 to the I/O device 120 (step S13). The I/O device 120 receives the write command from the I/O side extension device 140, and then transmits a response to the write command to the host computer 110 (step S14).

The host computer 110 transmits write data to the host side extension device 130 (step S15). The host side extension device 130 compresses the write data received from the host computer 110 (step S16), and then transfers the compressed write data to the I/O side extension device 140 (step S17). The I/O side extension device 140 transfers the compressed write data received from the host side extension device 130 to the I/O device 120 (step S18). Then, the I/O device 120 stores the compressed write data received from the I/O side extension device 140 in the disk device 122 thereof (step S19). The I/O device 120 transmits a response representing that the write data is stored in the disk device 122 thereof to the host computer 110 (step S20).

### Processing at the Time of Data Reading

FIG. 8 is a diagram illustrating a processing sequence at the time of data reading in the information processing system. As illustrated in FIG. 8, when data stored in the I/O device 120 is read, the host computer 110 generates a mode setting command representing that mode setting data is to be transmitted, and then transmits the mode setting command to the host side extension device 130 (step S21).

The host side extension device 130 transfers the mode setting command received from the host computer 110 to the I/O side extension device 140 (step S22). Then, the I/O side extension device 140 transfers the mode setting command received from the host side extension device 130 to the I/O device 120 (step S23).

The I/O device 120 transmits a response representing reception of the mode setting command to the host computer 110 through the I/O side extension device 140 and the host side extension device 130 (step S24).

The host computer 110 generates mode setting data, and then transmits the generated mode setting data to the host side extension device 130 (step S25). Since the code of the fifth bit of the mode setting data received from the host computer 110 is "0," the host side extension device 130 changes the code of the fifth bit of the mode setting data from "0" to "1" (step S26).

Then, the host side extension device 130 transmits the mode setting data to the I/O side extension device 140 (step S27). The I/O side extension device 140 transfers the mode setting data received from the host side extension device 130 to the I/O device 120 (step S28).

The I/O device 120 extracts the codes of the fourth and fifth bits of the mode setting data, and then stores the extracted codes in the compression aggregation setting information table 123a (step S29). Then, the I/O device 120 transmits a response representing reception of the mode setting data to the host computer 110 through the I/O side extension device 140 and the host side extension device 130 (step S30).

The host computer 110 generates the read command, and then transmits the generated read command to the host side extension device 130 (step S31). The host side extension device 130 transfers the read command received from the host computer 110 to the I/O side extension device 140 (step S32). Subsequently, the I/O side extension device 140 transfers the read command received from the host side extension device 130 to the I/O device 120 (step S33).

The I/O device 120 receives the read command from the I/O side extension device 140, reads compressed data stored in the disk device 122 thereof (step S34), and then transmits the read compressed data to the I/O side extension device 140 (step S35). The I/O side extension device 140 transfers the compressed data received from the I/O device 120 to the host side extension device 130 (step S36). The host side extension device 130 executes the decompression process on the compressed data received from the I/O side extension device (step S37), and then transmits the decompressed read data to the host computer 110 (step S38).

### Processing Procedure of Processing by Information Processing System

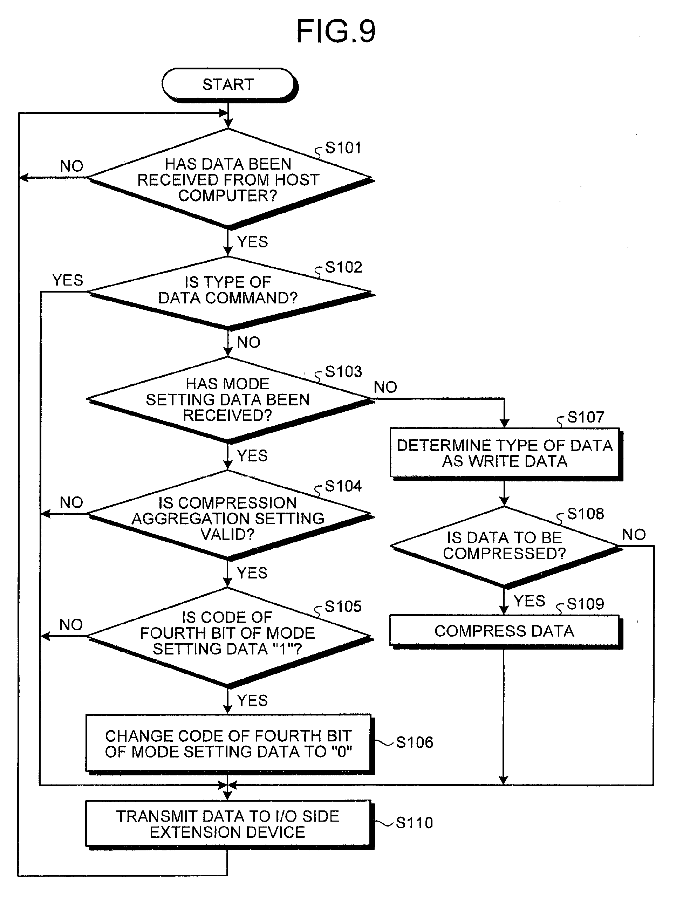

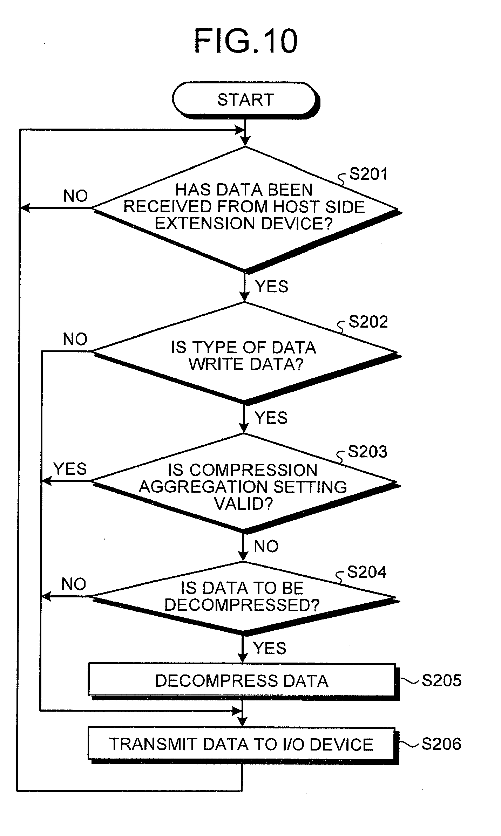

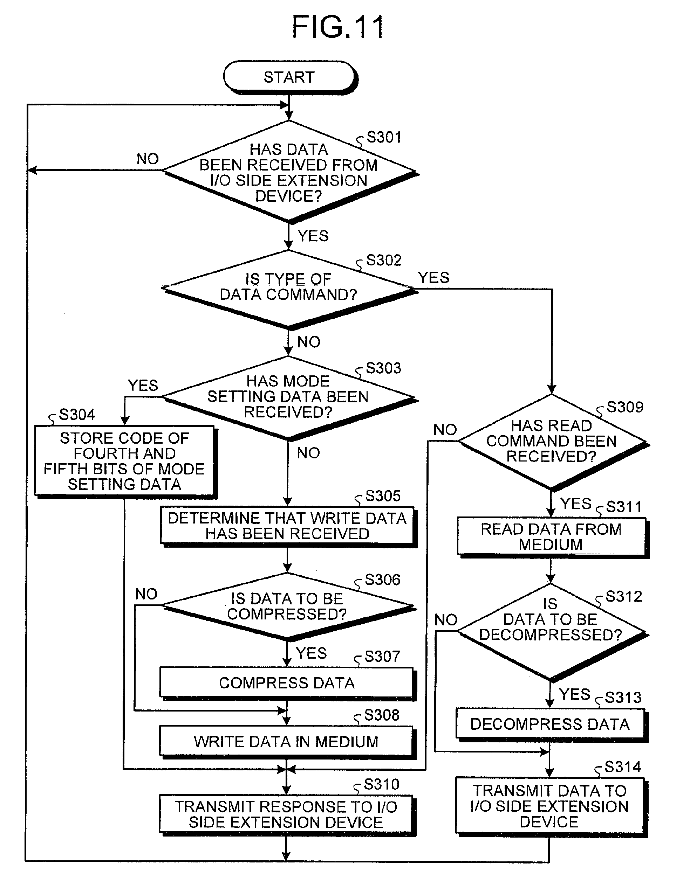

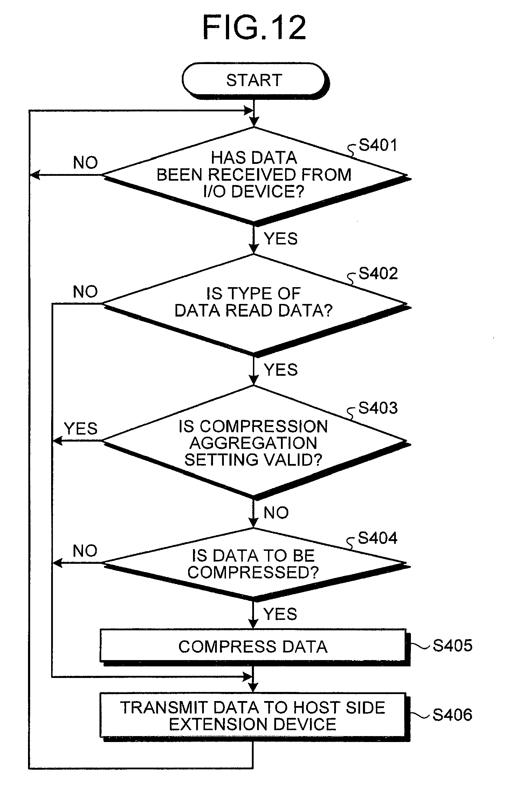

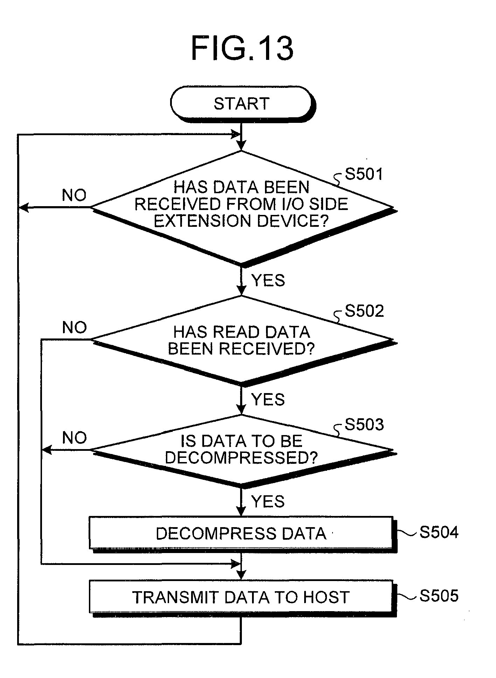

Next, a processing procedure of processing performed by the information processing system 100 according to the first embodiment will be described with reference to FIGS. 9 to 13. Here, a data transmission process performed by the host side extension device 130 will be described with reference to FIG. 9, and a data transmission process performed by the I/O side extension device 140 will be described with reference to FIG. 10. Further, processing performed by the I/O device 120 will be described with reference to FIG. 11, a data reception process performed by the I/O side extension device 140 will be described with reference to FIG. 12, and a data reception process performed by the host side extension device 130 will be described with reference to FIG. 13.

### Data Transmission Process by Host Side Extension Device

FIG. 9 is a flowchart illustrating a processing procedure of data transmission performed by the host side extension device. As illustrated in FIG. 9, when it is determined that data has been received from the host computer 110 (Yes in step S101), the first communication control unit 131 determines whether or not the type of received data is a command (step S102).

Here, when the first communication control unit 131 determines that the type of received data is a command (Yes in step S102), the second communication control unit 132 transmits the data to the I/O side extension device 140 (step S110). However, when the first communication control unit 131 determines that the type of received data is not a command (No in step S102), the first communication control unit 131 determines whether or not the type of received data is mode setting data (step S103).

Here, when the first communication control unit 131 determines that the type of received data is the mode setting data (Yes in step S103), the mode setting unit 134b determines whether or not the compression aggregation setting of its own device is valid (step S104). Here, when the mode setting unit 134b determines that the compression aggregation setting of its own device is not valid (No in step S104), the second communication control unit 132 transmits the data to the I/O side extension device 140 (step S110). However, when the mode setting unit 134b determines that the compression aggregation setting of its own device is valid (Yes in step S104), it is determined whether or not the code of the fourth bit of the mode setting data is "1" (step S105).

Here, when the mode setting unit 134b determines that the code of the fourth bit of the mode setting data is not "1" (No in step S105), the second communication control unit 132 transmits the data to the I/O side extension device 140 (step S110). However, the mode setting unit 134b determines that the code of the fourth bit of the mode setting data is "1" (Yes in step S105), the code of the fourth bit of the mode setting data is changed to "0" (step S106). Then, the second communication control unit 132 transmits the data to the I/O side extension device 140 (step S110).

Meanwhile, when the first communication control unit 131 determines that the type of received data is not the mode setting data (No in step S103), it is determined that write data has been received (step S107). Then, the write data processing unit 134c determines whether or not data is to be compressed with reference to the compression aggregation setting information table 133a (step S108).

Here, when the write data processing unit 134c determines that data is not to be compressed (No in step S108), the second communication control unit 132 transmits the data to the I/O side extension device 140 (step S110). However, when the write data processing unit 134c determines that data is to be compressed (Yes in step S108), the write data processing unit 134c compresses the write data (step S109). Then, the second communication control unit 132 transmits the data to the I/O side extension device 140 (step S110).

After processing of step S110 ends, the host side extension device 130 causes the process to proceed to step S101, and determines whether or not data has been received from the host computer 110.

### Data Transmission Process by I/O Side Extension Device

FIG. 10 is a flowchart illustrating a processing procedure of data transmission performed by the I/O side extension device. As illustrated in FIG. 10, when it is determined that data has been received from the host side extension device 130 (Yes in step S201), the second communication control unit 142 determines whether or not the type of received data is write data (step S202).

Here, when the second communication control unit 142 determines the write data has not been received (No in step S202), the first communication control unit 141 transfers the received data to the I/O device 120 (step S206).

However, when the second communication control unit 142 determines that the type of received data is the write data (Yes in step S202), the write data processing unit 144c determines whether or not the compression aggregation setting of its own device is valid (step S203). Here, when the write data processing unit 144c determines that the compression aggregation setting of its own device is valid (Yes in step S203), the first communication control unit 141 transfers the received data to the I/O device 120 (step S206).

Meanwhile, when the write data processing unit 144c determines that the compression aggregation setting of its own device is invalid (No in step S203), the following process is executed. In other words, the write data processing unit 144c determines whether or not the decompression process is executed on the write data with reference to the code of the fourth bit of the mode setting data stored in the compression aggregation setting information table 143a (step S204). Here, when the write data processing unit 144c determines that the decompression process is not executed on the write data (No in step S204), the first communication control unit 141 transfers the received data to the I/O device 120 (step S206).

However, when the write data processing unit 144c determines that the decompression process is executed on the write data (Yes in step S204), the write data processing unit 144c executes the decompression process on the write data (step S205), and then transfers the data to the I/O device 120 (step S206).

After processing of step S206 ends, the I/O side extension device 140 causes the process to proceed to step S201, and determines whether or not data has been received from the host side extension device 130.

### Processing by I/O Device

FIG. 11 is a flowchart illustrating a processing procedure of processing performed by the I/O device. As illustrated in FIG. 11, when data has been received from the I/O side extension device 140 (Yes in step S301), the communication control unit 121 determines whether or not the type of received data is a command (step S302).

Here, when it is determined that the type of received data is not a command (No in step S302), the communication control unit 121 determines whether or not the mode setting data has been received (step S303). When the communication control unit 121 determines that the mode setting data has been received (Yes in step S303), the mode setting unit 124b executes the following process. In other words, the mode setting unit 124b stores the codes of the fourth and fifth bits of the mode setting data in the compression aggregation setting information table 123a (step S304). Then, the mode setting unit 124b transmits a response to the mode setting data to the I/O side extension device 140 (step S310).

However, when the communication control unit 121 determines that the mode setting data has not been received (No in step S303), the communication control unit 121 determines that the write data has been received (step S305). Then, the write data processing unit 124c determines whether or not the compression process is executed on the write data with reference to the code of the fourth bit of the mode setting data stored in the compression aggregation setting information table 123a (step S306).

Here, when it is determined that the compression process is not executed on the write data (No in step S306), the write data processing unit 124c stores the data in the disk device 122 (step S308). However, when it is determined that the compression process is executed on the write data (Yes in step S306), the write data processing unit 124c compresses the data (step S307), and then stores the compressed data in the disk device 122 (step S308). After processing of step S308 ends, the write data processing unit 124c transmits a response to the write data to the I/O side extension device 140 (step S310).

Meanwhile, when it is determined that the type of received data is a command (Yes in step S302), the communication control unit 121 determines whether or not the received command is the read command (step S309). When the communication control unit 121 determines that the read command has not been received (No in step S309), the command processing unit 124a transmits a response to the command to the I/O side extension device 140 (step S310).

However, the communication control unit 121 determines that the read command has been received (Yes in step S309), the read data processing unit 124d reads request data from the disk device 122 (step S311).

Then, the read data processing unit 124d determines whether or not the decompression process is executed (step S312). Here, when it is determined that the decompression process is executed (Yes in step S312), the read data processing unit 124d decompresses the data (step S313), and transmits the decompressed data to the I/O side extension device 140 (step S314). However, when it is determined that the decompression process is not executed (No in step S312), the read data processing unit 124d transmits the data to the I/O side extension device 140 (step S314).

After processing of step S310 or processing of step S314 ends, the I/O device 120 causes the process to proceed to step S301, and determines whether or not data has been received from the I/O side extension device 140.

### Data Reception Process by I/O side Extension Device

FIG. 12 is a flowchart illustrating a processing procedure of a data reception process performed by the I/O side extension device. As illustrated in FIG. 12, when data has been received from the I/O device 120 (Yes in step S401), the first communication control unit 141 determines whether or not the type of received data is the read data (step S402).

Here, when the first communication control unit 141 determines that the type of received data is not the read data (No in step S402), the second communication control unit 142 transmits the received data to the host side extension device 130 (step S406). However, when the first communication control unit 141 determines that the type of received data is the read data (Yes in step S402), the read data processing unit 144d determines whether or not the compression aggregation setting of its own device is valid (step S403).

Here, when the read data processing unit 144d determines that the compression aggregation setting of its own device is valid (Yes in step S403), the second communication control unit 142 transmits the received data to the host side extension device 130 (step S406). However, when it is determined that the compression aggregation setting of its own device is invalid (No in step S403), the read data processing unit 144d executes the following process. In other words, the read data processing unit 144d determines whether or not the compression process is executed on the read data with reference to the code of the fifth bit of the mode setting data stored in the compression aggregation setting information table 143a (step S404).

Here, when the read data processing unit 144d determines that the compression process is not executed on the read data (No in step S404), the second communication control unit 142 transmits the received data to the host side extension device 130 (step S406). However, when it is determined that the compression process is executed on the read data (Yes in step S404), the read data processing unit 144d compresses the data (step S405). Then, the second communication control unit 142 transmits the data compressed by the read data processing unit 144d to the host side extension device 130 (step S406).

After processing of step S406 ends, the I/O side extension device 140 causes the process to proceed to step S401, and determines whether or not data has been received from the I/O device 120.

### Data Reception Process by Host Side Extension Device

FIG. 13 is a flowchart illustrating a processing procedure of a data reception process performed by the host side extension device. As illustrated in FIG. 13, when data has been received from the I/O side extension device 140 (Yes in step S501), the second communication control unit 132 determines whether or not the type of received data is the read data (step S502).

Here, when the second communication control unit 132 determines that the type of received data is not the read data (No in step S502), the first communication control unit 131 transmits the received data to the host computer 110 (step S505). However, when the second communication control unit 132 determines that the type of received data is the read data (Yes in step S502), the read data processing unit 134d executes the following process. In other words, the read data processing unit 134d determines whether or not the decompression process is executed on the read data with reference to the code of the fifth bit of the mode setting data stored in the compression aggregation setting information table 133a (step S503).

Here, when the read data processing unit 134d determines that the decompression process is not executed (No in step S503), the first communication control unit 131 transmits the received data to the host computer 110 (step S505). However, when it is determined that the decompression process is executed (Yes in step S503), the read data processing unit 134d executes the data decompression process (step S504). Then, the first communication control unit 131 transmits the data decompressed by the read data processing unit 134d to the host computer 110 (step S505). After processing of step S505 ends, the host side extension device 130 causes the process to proceed to step S501, and determines whether or not data has been received from the I/O side extension device 140.

### Effects

As described above, when data is transmitted from the host computer 110 to the I/O device 120, the host side extension device 130 notifies the I/O side extension device 140 and the I/O device 120 of the fact that the data compression process and the data decompression process are aggregated into its own device. As a result, the I/O side extension device 140 does not execute the decompression process, and the I/O device 120 does not execute the compression process. In other words, in the information processing system, the number of times that the compression process and the decompression process are executed can be reduced. Further, even when data is transmitted from the I/O device 120 to the host computer 110, the host side extension device 130 similarly notifies the I/O side extension device 140 and the I/O device 120 of the fact that the data compression process and the data decompression process are aggregated into its own device. As a result, the I/O device 120 does not execute the decompression process, and the I/O side extension device 140 does not execute the compression process. As described above, in the information processing system 100, when transmission and reception of data are performed between the host computer 110 and the I/O device 120, a processing load in the I/O device 120 and the I/O side extension device 140 can be reduced.

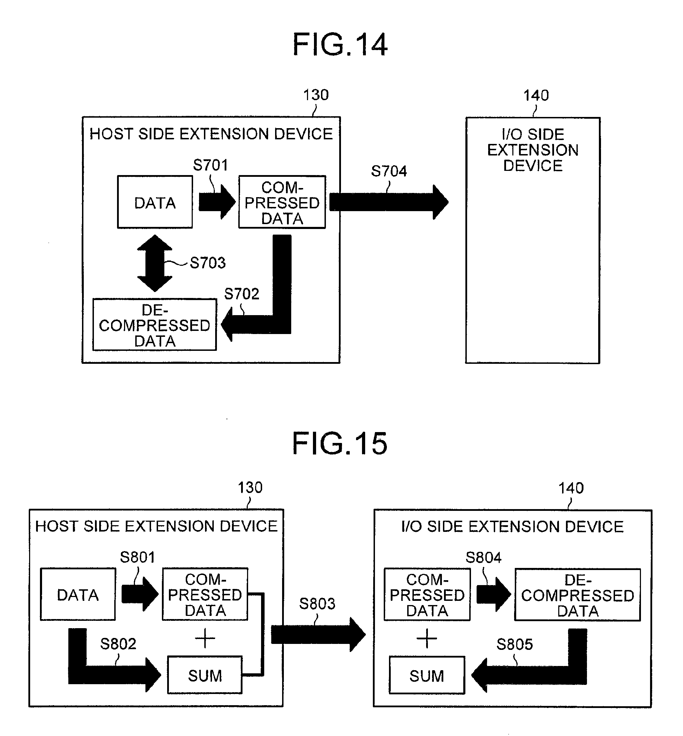

Further, since the number of times that the compression process is executed as described above, in the information processing system 100, a processing load in each device when data checking is executed can be reduced. Effects of the disclosed technology will be described with reference to FIGS. 14 and 15.

FIG. 14 is a diagram illustrating an example of a compressed data verifying process. As illustrated in FIG. 14, when the host computer 110 writes data in the I/O device 120, the host side extension device 130 executes the compression process on the data (step S701), and executes the decompression process on the compressed data (step S702). Then, the host side extension device 130 compares the decompressed data with the non-compressed data (step S703). When the decompressed data is identical to the non-compressed data, the host side extension device 130 transmits the compressed data to the I/O side extension device 140 (step S704). Further, when the host computer 110 reads data from the I/O device 120, the I/O side extension device 140 executes the same process. In the information processing system 100, since the compression process and the decompression process are aggregated into the host side extension device, the I/O side extension device 140 needs not necessarily perform the compressed data verifying process. As a result the I/O side extension device 140 can further improve the processing efficiency.

FIG. 15 is a diagram illustrating another example of a compressed data verifying process. As illustrated in FIG. 15, when the host computer 110 writes data in the I/O device 120, the host side extension device 130 executes the data compression process to generate compressed data (step S801), and adds a SUM value to the compressed data (step S802). Then, the host side extension device 130 transmits the compressed data including the SUM value to the I/O side extension device 140 (step S803). The I/O side extension device 140 decompresses the compressed data (step S804), and performs verification of the SUM value on the decompressed data (step S805). Further, when the host computer 110 reads data from the I/O device 120, the host side extension device 130 executes the same process. In the information processing system 100, since the compression process and the decompression process are aggregated into the host side extension device, the host side extension device 130 needs not necessarily perform the compressed data verifying process. As a result, the host side extension device 130 can further improve the processing efficiency.

Further, since data transmitted or received between the I/O side extension device 140 and the I/O device 120 is the already compressed data, data can be read or written with more than transfer capability of the channel 102.

Further, when the compression aggregation setting of the host side extension device 130 and the compression aggregation setting of the I/O side extension device 140 are set to be valid in advance, the I/O side extension device 140 needs not necessarily have a compression processing function or a decompression processing function. As a result, the cost for implementing the compression processing function or the decompression processing function in the I/O side extension device 140 can be reduced.

### [b] Second Embodiment

Besides the above-described embodiment, the present invention can be embodied in various forms. In the second embodiment, another embodiment for embodying the present invention will be described.

### System Configuration and the like

Further, among the processes described in the first embodiment, all or some of the processes described to be automatically performed may be manually performed. Alternatively, all or some of the processes described to be manually performed may be automatically performed by a well-known method. In addition, a processing procedure, a control procedure, and a concrete name, which are described in this specification or illustrated in the drawings, can be arbitrarily changed unless specified otherwise. Further, information stored in a storage unit illustrated in the drawings is merely an example, and information needs not necessarily be stored as illustrated in the drawings.

Further, each component illustrated in the drawings needs not necessarily be physically configured as illustrated in the drawings. For example, in the host side extension device 130, the write data processing unit 134c may be integrated with the read data processing unit 134d. Further, all or any part of processing functions performed by the respective devices may be implemented by a CPU and a program analyzed and executed by the CPU or may be implemented as hardware by a wired logic.

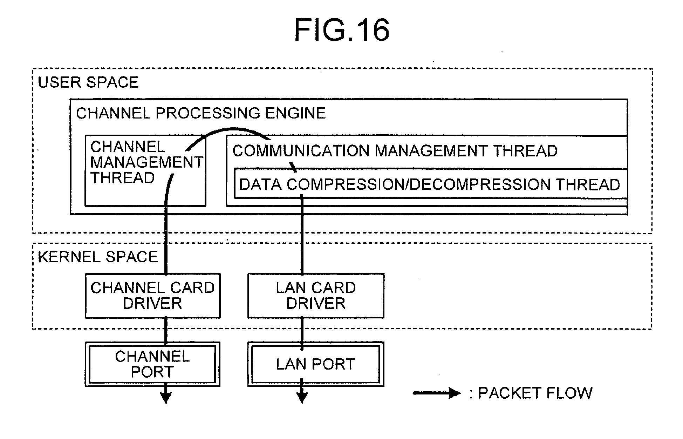

Further, the disclosed technology may implement the function of the host side extension device 130 by firmware. Here, processing of executing the function of the host side extension device 130 as firmware will be described with reference to FIG. 16. FIG. 16 is a diagram illustrating processing of executing the function of the host side extension device as firmware. In the following, firmware of executing the function of the host side extension device 130 is referred to as a "channel processing engine."

As illustrated in FIG. 16, the channel processing engine executes a channel management thread, a communication management thread, and a data compression/decompression thread in user space.

The channel management thread executes transmission and reception of data with the host computer 110 by controlling a channel port which is an interface with the host computer 110 through a channel card driver operating in kernel space. For example, the channel management thread receives the mode setting data from the host computer 110, and sets the code of the fourth bit and the code of the fifth bit of the mode setting data to "0" and "1," respectively, when the compression aggregation setting of its own device is valid.

The communication management thread executes transmission and reception of data with the I/O side extension device 140 by controlling a LAN port which is an interface, for example, with the I/O side extension device 140 through a LAN card driver operating in kernel space.

The data compression/decompression thread executes the compression process on the write data received from the host computer 110 or the decompression process on the read data received from the I/O device 120 through the I/O side extension device 140.

Processing efficiency at the time of information communication can be further improved.

## Claims

1. A communication device (130) for performing transmission and reception of data with another device through a relay device connected to a network, the communication device (130) comprising:
a compression process unit (134c) for executing a compression process on data to be transmitted to the other device and generates compressed data;
**characterized by**
a notification control unit (134b) for including decompression control information to instruct the relay device not to execute a decompression process on the compressed data and compression control information to instruct the other device not to execute a compression process on data in a transmission notice notifying that the communication device is to transmit the compressed data to the other device through the relay device; and
a transmitting unit (132) for transmitting the transmission notice including the decompression control information and the compression control information to the other device through the relay device.

2. The communication device (130) according to claim 1, wherein
the notification control unit (134b) includes
decompression control information to instruct the other device not to execute a decompression process on data and compression control information to instruct the relay device not to execute a compression process on data in a reception notice notifying that the communication device is to receive compressed data stored in the other device from the other device through the relay device, and
the transmitting unit (132) is configured to transmit the reception notice including the decompression control information and the compression control information to the other device through the relay device.

3. A method of controlling a communication device (130) that performs transmission and reception of data with another device through a relay device connected to a network, the method comprising:
executing, a compression process on data to be transmitted to the other device and generating compressed data
characterized byincluding decompression control information to instruct the relay device not to execute a decompression process on the compressed data and compression control information to instruct the other device not to execute a compression process on data in a transmission notice notifying that the communication device is to transmit the compressed data to the other device through the relay device, and
transmitting the transmission notice including the decompression control information and the compression control information to the other device through the relay device.

4. The method of controlling the communication device (130) according to claim 3, wherein
the including includes including decompression control information to instruct the other device not to execute a decompression process on data and compression control information to instruct the relay device not to execute a compression process on data in a reception notice notifying that the communication device is to receive compressed data stored in the other device from the other device through the relay device, and
the transmitting includes transmitting the reception notice including the decompression control information and the compression control information to the other device through the relay device.

5. An information processing system, comprising:
an information processing device (110);
an I/O device (120) for receiving an input and output of data from the information processing device (110);
a first communication device (130) that is disposed between the information processing device (110) and the I/O device (120) and is connected with the information processing device (110); and
a second communication device (140) that is connected with the first communication device (130) and the I/O device ( 120),
wherein the first communication device (130) comprises
a first receiving unit (131) for receiving a transmission notice notifying that the information processing device (110) is to transmit data to the I/O device (120) and data to be transmitted from the information processing device to the I/O device (120) from the information processing device (110),
a compression process unit (134c) for executing a compression process on the data to be transmitted and generates compressed data,
a notification control unit (134b) for including decompression control information to instruct the second communication device not to execute a decompression process on data and compression control information to instruct the I/O device (120) not to execute a compression process on data in the transmission notice, and
a first transmitting unit (132) for transmitting the transmission notice including the decompression control information and the compression control information and the compressed data to the second communication device (140),
the second communication device (140) comprises
a second receiving unit (142) for receiving the transmission notice and the compressed data from the first communication device (130),
a first determining unit (144b) for determining whether or not the decompression control information is included in the transmission notice, and
a second transmitting unit (144c) for transmitting the compressed data to the I/O device (120) without executing a decompression process on the compressed data received from the first communication device when the first determining unit (144b) determines that the decompression control information is included, and
the I/O device (120) comprises
a storage unit (122) for storing data received from the information processing device (110),
a third receiving unit (121) for receiving the transmission notice and the compressed data from the second communication device (140),
a second determining unit (123c) for determining whether or not the compression control information is included in the transmission notice, and
a storing unit (123d) for storing the compressed data received from the second communication device (140) in the storage unit (122) without executing a compression process on the compressed data when the second determining unit (123c) determines that the compression control information is included.

6. The information processing system according to claim 5, wherein the second communication device (140) further comprises
a fourth receiving unit (141) for receiving the compressed data from the I/O device (120), and
a third transmitting unit (144d) for transmitting compressed data received from the I/O device (120) to the first communication device (130) without executing a compression process on the compressed data when the first determining unit (144b) determines that the compression control information is included in a reception notice, and
the I/O device (120) further comprises
a reading unit (123e) for reading data notified by the reception notice from the storage unit (122), and
a fourth transmitting unit (121,123e) for transmitting the compressed data read by the reading unit (123e) to the second communication device (140) without executing a decompression process on the read compressed data when the second determining unit (123c) determines that the decompression control information is included in the reception notice,
the first receiving unit (131) is configured to receive a reception notice notifying that the information processing device (110) is to receive compressed data stored in the I/O device (120) from the I/O device (120) from the information processing device (110),
the notification control unit (134b) includes decompression control information to instruct the I/O device (120) not to execute a decompression process on data and compression control information to instruct the second communication device (140) not to execute a compression process on data in the reception notice,
the first transmitting unit (132) is configured to transmit the reception notice including the decompression control information and the compression control information to the second communication device (140),
the second receiving unit (142) is configured to receive the reception notice from the first communication device,
the second transmitting unit (141) is configured to transmit the reception notice to the I/O device (120),
the first determining unit (144b) is configured to determine whether or not the compression control information is included in the reception notice,
the storage unit (122) is configured to store the compressed data,
the third receiving unit (121) is configured to receive the reception notice from the second communication device, and
the second determining unit (123c) is configured to determine whether or not the decompression control information is included in the reception notice.

## Patentansprüche

1. Kommunikationsvorrichtung (130) zum Durchführen des Sendens und Empfangens von Daten mit einer anderen Vorrichtung über eine Relaisvorrichtung, die mit einem Netz verbunden ist, wobei die Kommunikationsvorrichtung (130) Folgendes umfasst:
eine Komprimierungsverfahrenseinheit (134c) zum Ausführen eines Komprimierungsverfahrens auf Daten, die an die andere Vorrichtung zu senden sind, und die komprimierte Daten erzeugt;
**gekennzeichnet durch**:
eine Mitteilungssteuerungseinheit (134b) zum Einschließen von Dekomprimierungssteuerungsinformationen, um der Relaisvorrichtung zu befehlen, ein Dekomprimierungsverfahren auf den komprimierten Daten nicht auszuführen, und von Komprimierungssteuerungsinformationen, um der anderen Vorrichtung zu befehlen, ein Komprimierungsverfahren auf Daten nicht auszuführen, in einer Sendenachricht, die mitteilt, dass die Kommunikationsvorrichtung die komprimierten Daten über die Relaisvorrichtung an die andere Vorrichtung senden wird; und
eine Sendeeinheit (132) zum Senden der Sendenachricht, die die Dekomprimierungssteuerungsinformationen und die Komprimierungssteuerungsinformationen umfasst, über die Relaisvorrichtung an die andere Vorrichtung.

2. Kommunikationsvorrichtung (130) nach Anspruch 1, wobei:
die Mitteilungssteuereinheit (134b) Folgendes umfasst:
Dekomprimierungssteuerungsinformationen, um der anderen Vorrichtung zu befehlen, ein Dekomprimierungsverfahren auf Daten nicht auszuführen, und Komprimierungssteuerungsinformationen, um der Relaisvorrichtung zu befehlen, ein Komprimierungsverfahren auf Daten nicht auszuführen, in einer Empfangsnachricht, mit der mitgeteilt wird, dass die Kommunikationsvorrichtung komprimierte Daten, die in der anderen Vorrichtung gespeichert sind, über die Relaisvorrichtung von der anderen Vorrichtung empfangen wird, und
die Sendeeinheit (132) konfiguriert ist, um die Empfangsnachricht, die die Dekomprimierungssteuerungsinformationen und die Komprimierungssteuerungsinformationen umfasst, über die Relaisvorrichtung an die andere Vorrichtung zu senden.

3. Verfahren zum Steuern einer Kommunikationsvorrichtung (130), das das Senden und das Empfangen von Daten mit einer anderen Vorrichtung über eine Relaisvorrichtung durchführt, die mit einem Netz verbunden ist, wobei das Verfahren Folgendes umfasst:
Ausführen eines Komprimierungsverfahrens auf Daten, die an die andere Vorrichtung zu senden sind, und Erzeugen von komprimierten Daten,
**gekennzeichnet durch** Einschließen von Dekomprimierungssteuerungsinformationen, um der Relaisvorrichtung zu befehlen, ein Dekomprimierungsverfahren auf den komprimierten Daten nicht auszuführen, und Komprimierungssteuerungsinformationen, um der anderen Vorrichtung zu befehlen, ein Komprimierungsverfahren auf Daten nicht auszuführen, in einer Sendenachricht, die mitteilt, dass die Kommunikationsvorrichtung die komprimierten Daten über die Relaisvorrichtung an die andere Vorrichtung senden wird, und
Senden der Sendenachricht, die die Dekomprimierungssteuerungsinformationen und die Komprimierungssteuerungsinformationen umfasst, über die Relaisvorrichtung an die andere Vorrichtung.

4. Verfahren zum Steuern der Kommunikationsvorrichtung (130) nach Anspruch 3, wobei:
das Einschließen das Einschließen von Dekomprimierungssteuerungsinformationen, um der anderen Vorrichtung zu befehlen, ein Dekomprimierungsverfahren auf Daten nicht auszuführen, und von Komprimierungssteuerungsinformationen, um der Relaisvorrichtung zu befehlen, ein Komprimierungsverfahren auf Daten nicht auszuführen, in einer Empfangsnachricht umfasst, die mitteilt, dass die Kommunikationsvorrichtung komprimierte Daten, die in der anderen Vorrichtung gespeichert sind, über die Relaisvorrichtung von der anderen Vorrichtung empfangen wird, und
das Senden das Senden der Empfangsnachricht, die die Dekomprimierungssteuerungsinformationen und die Komprimierungssteuerungsinformationen umfasst, über die Relaisvorrichtung an die andere Vorrichtung umfasst.

5. Informationsverarbeitungssystem, das Folgendes umfasst:
eine Informationsverarbeitungsvorrichtung (110);
eine E/A-Vorrichtung (120) zum Empfangen einer Eingabe und Ausgabe von Daten von der Informationsverarbeitungsvorrichtung (110);
eine erste Kommunikationsvorrichtung (130), die zwischen der Informationsverarbeitungsvorrichtung (110) und der E/A-Vorrichtung (120) angeordnet ist und mit der Informationsverarbeitungsvorrichtung (110) verbunden ist; und
eine zweite Kommunikationsvorrichtung (140), die mit der ersten Kommunikationsvorrichtung (130) und der E/A-Vorrichtung (120) verbunden ist,
wobei die erste Kommunikationsvorrichtung (130) Folgendes umfasst:
eine erste Empfangseinheit (131) zum Empfangen einer Sendenachricht, die mitteilt, dass die Informationsverarbeitungsvorrichtung (110) Daten an die E/A-Vorrichtung (120) und Daten, die von der Informationsverarbeitungsvorrichtung an die E/A-Vorrichtung (120) zu senden sind, senden wird, von der Informationsverarbeitungsvorrichtung (110),
eine Komprimierungsverfahrenseinheit (134c) zum Ausführen eines Komprimierungsverfahrens auf den Daten, die zu senden sind, und die komprimierte Daten erzeugt,
eine Mitteilungssteuerungseinheit (134b) zum Einschließen von Dekomprimierungssteuerungsinformationen, um der zweiten Kommunikationsvorrichtung zu befehlen, ein Dekomprimierungsverfahren nicht auf Daten auszuführen, und Komprimierungssteuerungsinformationen, um der E/A-Vorrichtung (120) zu befehlen, ein Komprimierungsverfahren nicht auf Daten auszuführen, in der Sendenachricht, und
eine erste Sendeeinheit (132) zum Senden der Sendenachricht, die die Dekomprimierungssteuerungsinformationen und die Komprimierungssteuerungsinformationen und die komprimierten Daten umfasst, an die zweite Kommunikationsvorrichtung (140),
wobei die zweite Kommunikationsvorrichtung (140) Folgendes umfasst:
eine zweite Empfangseinheit (142) zum Empfangen der Sendenachricht und der komprimierten Daten von der ersten Kommunikationsvorrichtung (130),
eine erste Bestimmungseinheit (144b) zum Bestimmen, ob die Dekomprimierungssteuerungsinformationen in die Sendenachricht eingeschlossen sind oder nicht, und
eine zweite Sendeeinheit (144c) zum Senden der komprimierten Daten an die E/A-Vorrichtung (120) ohne Ausführen eines Dekomprimierungsverfahrens auf den komprimierten Daten, die von der ersten Kommunikationsvorrichtung empfangen werden, wenn die erste Bestimmungseinheit (144b) bestimmt, dass die Dekomprimierungssteuerungsinformationen eingeschlossen sind, und
die E/A-Vorrichtung (120) Folgendes umfasst:
eine Speichereinheit (122) zum Speichern von Daten, die von der Informationsverarbeitungsvorrichtung (110) empfangen werden,
eine dritte Empfangseinheit (121) zum Empfangen der Sendenachricht und der komprimierten Daten von der zweiten Kommunikationsvorrichtung (140),
eine zweite Bestimmungseinheit (123c) zum Bestimmen, ob die Komprimierungssteuerungsinformationen in der Sendenachricht eingeschlossen sind oder nicht, und
eine Speichereinheit (123d) zum Speichern der komprimierten Daten, die von der zweiten Kommunikationsvorrichtung (140) empfangen werden, in der Speichereinheit (122) ohne Ausführen eines Komprimierungsverfahrens auf den komprimierten Daten, wenn die zweite Bestimmungseinheit (123c) bestimmt, dass die Komprimierungssteuerungsinformationen eingeschlossen sind.

6. Informationsverarbeitungssystem nach Anspruch 5, wobei die zweite Kommunikationsvorrichtung (140) ferner Folgendes umfasst:
eine vierte Empfangseinheit (141) zum Empfangen der komprimierten Daten von der E/A-Vorrichtung (120), und
eine dritte Sendeeinheit (144d) zum Senden von komprimierten Daten, die von der E/A-Vorrichtung (120) empfangen werden, an die erste Kommunikationsvorrichtung (130) ohne Ausführen eines Komprimierungsverfahrens auf den komprimierten Daten, wenn die erste Bestimmungseinheit (144b) bestimmt, dass die Komprimierungssteuerungsinformationen in einer Empfangsnachricht eingeschlossen sind, und
die E/A-Vorrichtung (120) ferner Folgendes umfasst:
eine Leseeinheit (123e) zum Lesen von Daten, die durch die Empfangsnachricht von der Speichereinheit (122) mitgeteilt werden, und
eine vierte Sendeeinheit (121, 123e) zum Senden der komprimierten Daten, die durch die Leseeinheit (123e) gelesen werden, an die zweite Kommunikationsvorrichtung (140) ohne Ausführen eines Dekomprimierungsverfahrens auf den gelesenen komprimierten Daten, wenn die zweite Bestimmungseinheit (123c) bestimmt, dass die Dekomprimierungssteuerungsinformationen in der Empfangsnachricht eingeschlossen sind,
wobei die erste Empfangseinheit (131) konfiguriert ist, um eine Empfangsnachricht, die mitteilt, dass die Informationsverarbeitungsvorrichtung (110) komprimierte Daten, die in der E/A-Vorrichtung (120) gespeichert sind, von der E/A-Vorrichtung (120) empfangen wird, von der Informationsverarbeitungsvorrichtung (110) zu empfangen,
wobei die Mitteilungssteuerungseinheit (134b) Dekomprimierungssteuerungsinformationen, um der E/A-Vorrichtung (120) zu befehlen, ein Dekomprimierungsverfahren auf Daten nicht auszuführen, und Komprimierungssteuerungsinformationen, um der zweiten Kommunikationsvorrichtung (140) zu befehlen, ein Komprimierungsverfahren auf Daten nicht auszuführen, in der Empfangsnachricht einschließt,
wobei die erste Sendeeinheit (132) konfiguriert ist, um die Empfangsnachricht, die die Dekomprimierungssteuerungsinformationen, und die Komprimierungssteuerungsinformationen umfasst, an die zweite Kommunikationsvorrichtung (140) zu senden,
wobei die zweite Empfangseinheit (142) konfiguriert ist, um die Empfangsnachricht von der ersten Kommunikationsvorrichtung zu empfangen,
die zweite Sendeeinheit (141) konfiguriert ist, um die Empfangsnachricht an die E/A-Vorrichtung (120) zu senden,
die erste Bestimmungseinheit (144b) konfiguriert ist, um zu bestimmen, ob die Komprimierungssteuerungsinformationen in der Empfangsnachricht eingeschlossen sind oder nicht,
die Speichereinheit (122) konfiguriert ist, um die komprimierten Daten zu speichern,
die dritte Empfangseinheit (121) konfiguriert ist, um die Empfangsnachricht von der zweiten Kommunikationsvorrichtung zu empfangen, und
die zweite Bestimmungseinheit (123c) konfiguriert ist, um zu bestimmen, ob die Dekomprimierungssteuerungsinformationen in der Empfangsnachricht eingeschlossen sind oder nicht.

## Revendications

1. Dispositif de communication (130) destiné à mettre en oeuvre une transmission et une réception de données avec un autre dispositif par le biais d'un dispositif de relais connecté à un réseau, le dispositif de communication (130) comprenant :
une unité de traitement de compression (134c) destinée à exécuter un processus de compression sur des données devant être transmises à l'autre dispositif et à générer des données compressées ;
**caractérisé par** :
une unité de commande de notification (134b) destinée à inclure des informations de commande de décompression visant à commander au dispositif de relais de ne pas exécuter de processus de décompression sur les données compressées, et des informations de commande de compression visant à commander à l'autre dispositif de ne pas exécuter de processus de compression sur des données, dans une notification de transmission signalant que le dispositif de communication s'apprête à transmettre les données compressées à l'autre dispositif par le biais du dispositif de relais ; et
une unité de transmission (132) destinée à transmettre la notification de transmission incluant les informations de commande de décompression et les informations de commande de compression à l'autre dispositif par le biais du dispositif de relais.

2. Dispositif de communication (130) selon la revendication 1, dans lequel l'unité de commande de notification (134b) inclut :
des informations de commande de décompression visant à commander à l'autre dispositif de ne pas exécuter de processus de décompression sur des données, et des informations de commande de compression visant à commander au dispositif de relais de ne pas exécuter de processus de compression sur des données, dans une notification de réception signalant que le dispositif de communication s'apprête à recevoir des données compressées stockées dans l'autre dispositif à partir de l'autre dispositif par le biais du dispositif de relais ; et
l'unité de transmission (132) est configurée de manière à transmettre la notification de réception incluant les informations de commande de décompression et les informations de commande de compression à l'autre dispositif par le biais du dispositif de relais.

3. Procédé de commande d'un dispositif de communication (130) qui met en oeuvre une transmission et une réception de données avec un autre dispositif par le biais d'un dispositif de relais connecté à un réseau, le procédé consistant à :
exécuter un processus de compression sur des données devant être transmises à l'autre dispositif, et générer des données compressées ;
**caractérisé en ce qu'**il consiste à inclure des informations de commande de décompression visant à commander au dispositif de relais de ne pas exécuter de processus de décompression sur les données compressées, et des informations de commande de compression visant à commander à l'autre dispositif de ne pas exécuter de processus de compression sur des données, dans une notification de transmission signalant que le dispositif de communication s'apprête à transmettre les données compressées à l'autre dispositif par le biais du dispositif de relais ; et
transmettre la notification de transmission incluant les informations de commande de décompression et les informations de commande de compression à l'autre dispositif par le biais du dispositif de relais.

4. Procédé de commande du dispositif de communication (130) selon la revendication 3, dans lequel :
l'inclusion consiste à inclure des informations de commande de décompression visant à commander à l'autre dispositif de ne pas exécuter de processus de décompression sur des données, et des informations de commande de compression visant à commander au dispositif de relais de ne pas exécuter de processus de compression sur des données, dans une notification de réception signalant que le dispositif de communication s'apprête à recevoir des données compressées stockées dans l'autre dispositif à partir de l'autre dispositif par le biais du dispositif de relais ; et
la transmission consiste à transmettre la notification de réception incluant les informations de commande de décompression et les informations de commande de compression à l'autre dispositif par le biais du dispositif de relais.

5. Système de traitement d'informations, comprenant :
un dispositif de traitement d'informations (110) ;
un dispositif d'entrée/sortie, I/O, (120) destiné à recevoir une entrée et une sortie de données en provenance du dispositif de traitement d'informations (110) ;
un premier dispositif de communication (130) qui est agencé entre le dispositif de traitement d'informations (110) et le dispositif I/O (120) et qui est connecté au dispositif de traitement d'informations (110) ; et
un second dispositif de communication (140) qui est connecté au premier dispositif de communication (130) et au dispositif I/O (120) ;
dans lequel le premier dispositif de communication (130) comprend :
une première unité de réception (131) destinée à recevoir une notification de transmission signalant que le dispositif de traitement d'informations (110) s'apprête à transmettre des données au dispositif I/O (120), et des données devant être transmises du dispositif de traitement d'informations au dispositif I/O (120) à partir du dispositif de traitement d'informations (110) ;
une unité de traitement de compression (134c) destinée à exécuter un processus de compression sur les données devant être transmises, et à générer des données compressées ;
une unité de commande de notification (134b) destinée à inclure des informations de commande de décompression visant à commander au second dispositif de communication de ne pas exécuter de processus de décompression sur des données et des informations de commande de compression visant à commander au dispositif I/O (120) de ne pas exécuter de processus de compression sur des données dans la notification de transmission ; et
une première unité de transmission (132) destinée à transmettre la notification de transmission incluant les informations de commande de décompression et les informations de commande de compression, et les données compressées, au second dispositif de communication (140) ;
le second dispositif de communication (140) comprend :
une deuxième unité de réception (142) destinée à recevoir la notification de transmission et les données compressées en provenance du premier dispositif de communication (130) ;
une première unité de détermination (144b) destinée à déterminer si les informations de commande de décompression sont incluses ou non dans la notification de transmission ; et
une deuxième unité de transmission (144c) destinée à transmettre les données compressées au dispositif I/O (120) sans exécuter de processus de décompression sur les données compressées reçues à partir du premier dispositif de communication lorsque la première unité de détermination (144b) détermine que les informations de commande de décompression sont incluses ; et
le dispositif I/O (120) comprend :
une unité de stockage (122) destinée à stocker des données reçues à partir du dispositif de traitement d'informations (110) ;
une troisième unité de réception (121) destinée à recevoir la notification de transmission et les données compressées en provenance du second dispositif de communication (140) ;
une seconde unité de détermination (123c) destinée à déterminer si les informations de commande de compression sont incluses ou non dans la notification de transmission ; et
une unité de stockage (123d) destinée à stocker les données compressées reçues à partir du second dispositif de communication (140) dans l'unité de stockage (122) sans exécuter de processus de compression sur les données compressées lorsque la seconde unité de détermination (123c) détermine que les informations de commande de compression sont incluses.

6. Système de traitement d'informations selon la revendication 5, dans lequel le second dispositif de communication (140) comprend en outre :
une quatrième unité de réception (141) destinée à recevoir les données compressées en provenance du dispositif I/O (120) ; et
une troisième unité de transmission (144d) destinée à transmettre les données compressées reçues à partir du dispositif I/O (120) au premier dispositif de communication (130) sans exécuter de processus de compression sur les données compressées lorsque la première unité de détermination (144b) détermine que les informations de commande de compression sont incluses dans une notification de réception ; et
le dispositif I/O (120) comprend en outre :
une unité de lecture (123e) destinée à lire des données notifiées par la notification de réception à partir de l'unité de stockage (122) ; et
une quatrième unité de transmission (121, 123e) destinée à transmettre les données compressées lues par l'unité de lecture (123e) au second dispositif de communication (140), sans exécuter de processus de décompression sur les données compressées lues lorsque la seconde unité de détermination (123c) détermine que les informations de commande de décompression sont incluses dans la notification de réception ;
la première unité de réception (131) est configurée de manière à recevoir une notification de réception, signalant que le dispositif de traitement d'informations (110) s'apprête à recevoir des données compressées stockées dans le dispositif I/O (120), en provenance du dispositif I/O (120), à partir du dispositif de traitement d'informations (110) ;
l'unité de commande de notification (134b) inclut des informations de commande de décompression visant à commander au dispositif I/O (120) de ne pas exécuter de processus de décompression sur des données, et des informations de commande de compression visant à commander au second dispositif de communication (140) de ne pas exécuter de processus de compression sur des données dans la notification de réception ;
la première unité de transmission (132) est configurée de manière à transmettre la notification de réception incluant les informations de commande de décompression et les informations de commande de compression au second dispositif de communication (140) ;
la deuxième unité de réception (142) est configurée de manière à recevoir la notification de réception en provenance du premier dispositif de communication ;
la deuxième unité de transmission (141) est configurée de manière à transmettre la notification de réception au dispositif I/O (120) ;
la première unité de détermination (144b) est configurée de manière à déterminer si les informations de commande de compression sont incluses ou non dans la notification de réception ;
l'unité de stockage (122) est configurée de manière à stocker les données compressées ;
la troisième unité de réception (121) est configurée de manière à recevoir la notification de réception en provenance du second dispositif de communication ; et
la seconde unité de détermination (123c) est configurée de manière à déterminer si les informations de commande de décompression sont incluses ou non dans la notification de réception.
